# EUROPEAN PATENT APPLICATION

(11) **EP 2 369 471 A1**
(43) Date of publication of application: **28.09.2011**
(21) Application number: 11000982.6
(22) Date of filing: 08.02.2011
(51) Int. Cl.: G06F 9/44

(54) **A method for detecting user screens in mobile devices working under windows mobile operating system**

(30) Priority: 15.02.2010 IL 20397010
(71) Applicant: Deutsche Telekom AG, 53113 Bonn (DE)
(72) Inventor: Mimran, David, Tel Aviv 64516 (IL); Shapira, Bracha, Beer Sheva 84728 (IL)
(74) Representative: Flaccus, Rolf-Dieter

(57) **Abstract**

A method for detecting and identifying displayed screens of a specific running application on the display of a mobile device operating under the Windows Mobile^{®} operating system, according to which a collection of signatures is generated in advance, for all screens of the specific application by a modeler who scans each screen and extracts unique properties derived from all elements in the screen, which form a tree structure of the screen. The resulting collection of signatures is saved in the memory of the mobile device. A background application in the mobile device detects events and allocates a screen ID to each new screen. Once an event is detected, the background application starts consistent scanning from the root of the tree. Whenever an element is detected it is identified and a temporary signature is extracted using all identified elements within the scanned screen and the screen ID. The background application compares the temporary signature with the signatures saved in a database and if there is a match, the new screen is identified by the background application and the time in which the new screen appears is recorded.

## Description

### Field of the Invention

The present invention relates to the field of mobile communication devices. More particularly, the invention relates to a method for detecting and identifying screens of every application that runs under the Windows Mobile^{®} operating system (Microsoft^{®} Corporation, Redmond, Washington, U.S.A.), which are displayed on the display of a mobile communication device.

### Background of the Invention

Windows Mobile^{®} is an operating system (OS) designed for mobile devices and smartphones, with associated libraries, user interface, frameworks and reference implementations of common tools. Many mobile devices, such as cellphones and PDAs run specific mobile application (for example, messaging and email applications) under Windows Mobile^{®}. Each application is operated by the user via a User Interface (UI) that displays various screens to the user and requires inputs from the user. Such applications require skills from the user, in order to use them properly. Therefore, application developers design new mobile applications according to the level of an average user, which is estimated. However, practically, each user has different level and skills and many times, it is hard to obtain a reliable feedback regarding usability problems while running an application.

Such feedback may be very important for the operators of mobile devices, such as cellular operators. When they sell mobile devices, they offer a variety of applications for sale to the user, which installs them in his mobile device. However, once the user leaves the point of sale, there is almost no feedback from him regarding usability problems that he has with respect to the installed applications. Such a feedback is critical for the cellular operator, so as to return to the application developers and try overcoming usability problems and/or offering help tips to a user that faces difficulties. For example, if the user wishes to use a menu that is a part of an application UI and the menu is not clear or problematic to understand and operate, in many cases it will take him time to switch between screens that belong to this application.

Other users may stop using an application due to usability problems. Currently, the cellular operator has no way of knowing that, due to the lack of a detailed feedback.

One way for trying solving this problem is a technical support service. However, such service requires calling a technician who starts asking questions and offering remote advices, which are not always sufficient since the user cannot always focus on the problem and describe it properly. Therefore, this way is cumbersome and not efficient for most users.

To understand how users of Windows Mobile^{®} OS use their device it is required to detect the current screen that is visible to the user. Mobile applications, as well desktop applications are based on atomic units of different screens that make up the application. Therefore, the detection of the current visible screen should be made very fast, in order to be effective and non-disturbing to the user. It is also required that detection will be independent of the building and compiling process of the application that should be detected. This requirement is in order to be able to support vast amount of applications and to support dynamic changes in mobile applications, without human intervention.

There is therefore a need for a technique that can detect accurately the current visible screen of any mobile application that is running on a Windows Mobile^{®} OS.

All the methods described above have not yet provided satisfactory solutions to the problem of providing a detailed feedback regarding usability problems of an application running under Windows Mobile^{®} OS in an efficient way.

It is an object of the present invention to provide a method for detecting and identifying displayed screens of an application running under Windows Mobile^{®} OS, required for providing a detailed feedback regarding usability problems in an efficient way, which does not require active reports from users.

It is another object of the present invention to provide a method for providing a detailed feedback regarding usability problems while using a mobile application running under Windows Mobile^{®} OS, which can help application developers to overcome these problems.

Other objects and advantages of the invention will become apparent as the description proceeds.

### Summary of the Invention

The present invention is directed to a method for detecting and identifying displayed screens of a specific running application on the display of a mobile device operating under the Windows Mobile^{®} operating system, according to which a collection of signatures is generated, in advance, for all screens of the specific application by a modeler. The modeler scans each screen consistently in the same manner and extracts unique properties (such as the classname of the displayed screen) derived from all elements in the screen, which form a tree structure of the screen. The resulting collection of signatures is saved in the memory of the mobile device. A background application is installed in the mobile device, for detecting events (the generation of each new screen in the specific application) and allocating a screen ID to each new screen. Once an event (i.e., an intersection with a leaf or with a branch of the tree) is detected, the background application is allowed to start consistent scanning from the root of the tree. Whenever an element is detected during scanning, the element is identified and a temporary signature is extracted using all identified elements within the scanned screen and the screen ID. The background application compares the temporary signature with the signatures saved in the database and if there is a match, the new screen is identified by the background application and the time in which the new screen appears is recorded.

A time line which contains the timing of all identified screens may be generated and saved in a remote location.

Each element detected during scanning may be identified by the classname of the foreground window.

The specific running application may be the operating system of the mobile device, which can be a cellphone or a PDA.

### Brief Description of the Drawings

The above and other characteristics and advantages of the invention will be better understood through the following illustrative and non-limitative detailed description of preferred embodiments thereof, with reference to the appended drawings, wherein:

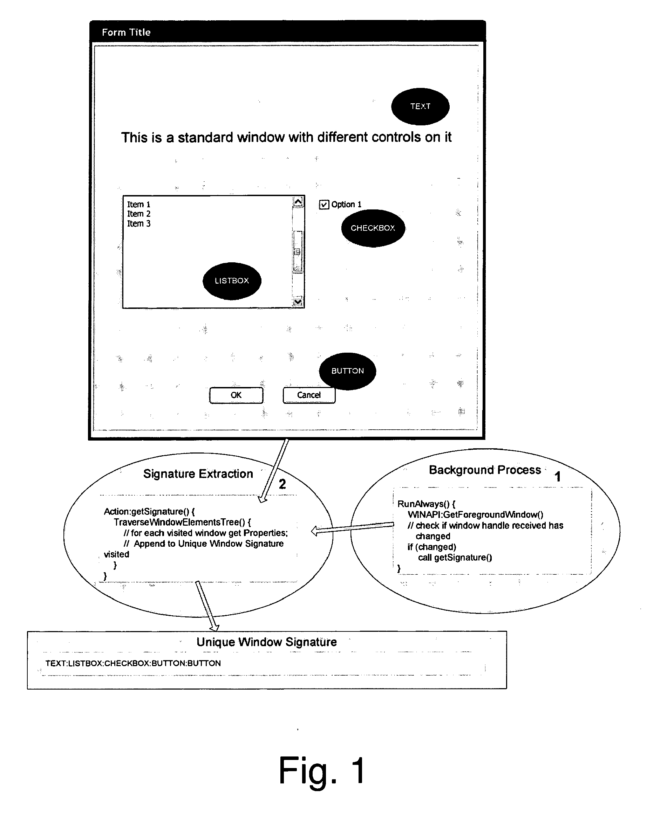

- Fig. 1 illustrates a typical window structure of an application and the process of detecting and identifying screens of an application that runs under Windows Mobile^{®} OS, according to an embodiment of the invention.

### Detailed Description of Preferred Embodiments

The present invention relates to a method that allows a third party code segment to detect and identify a specific Windows Mobile^{®} window, which is visible on the screen of every running application on a mobile device having the Windows Mobile^{®} OS.

The Windows Mobile^{®} OS has special windowing system, where each window that is created within an application acts as a container to its objects which will be referred to hereinafter also as "controls". These objects may include, for example, textual headlines, buttons, lists and menus. Conventional methods of working within the Windows Mobile^{®} OS limits the ability to understand which UI objects (or elements) exist within a window.

According to an embodiment of the invention, the logical structure of screens and windows of applications running under Windows Mobile^{®} are detected and identified, so as to "understand" the window structure and generate a unique signature for each possible screen in the application, in order to be able accurately identify running screens. The detection and identification of screens is critical in the field of monitoring application usability and data collection.

A typical window structure of an application is shown in Fig. 1 (upper part). The active (foreground) window comprises (starting from top left corner to the right and downward) a first textual element 101, a menu element 102, a check box 103 and a click button 104. This structure will be used for generating a unique signature for that window, which considers both the type of element and its appearance order within the window.

This structure can be mapped to a tree scheme. In an illustrative manner the foreground window container can be viewed as a root of tree, where the elements below can be an endpoint leaf or a branch, as illustrated.

The method proposed by the present invention allows a code segment that is not aware to the internal structure of a screen (created by a third party, such as an application developer) to accurately detect and identify it within the Windows Mobile^{®} mobile OS.

The "detection" method proposed by present invention is based on the way the system organizes the relationship between a foreground window that is visible on screen and its UI elements (objects). The window that is displayed on screen is a kind of container to the UI elements within it, while each UI element within this window can be recursively considered as a container to the elements within this UI element. Each container can act as an element and vice versa, while each one of them has a common Windows Mobile^{®} API (Application Programming Interface: the specific method prescribed by a computer operating system or by an application program by which a programmer writing an application program can make requests of the operating system or another application) that allows finding its predecessor and successor elements correspondingly.

The detection method starts with a system handle to foreground (foreground) window and then it runs the process, which will be referred to hereinafter also as "Signature Extraction", which traverses the tree of UI elements from top to bottom and from left to right, while each node of the tree is visited once. Each UI element can be queried for its physical position on screen and dimensions on screen. Together with the screen position and dimensions the method also captures the position within the logical elements tree where two variables are used, the level in the tree and the left to right position. All these variables of a UI element are transferred to a string format and constitute the interim signature of the element. During the traversal process, each interim signature of a UI element is appended to one string which is the overall screen signature. At the end of the traversal process, a unique string is generated, i.e., the signature that identifies the screen in a unique manner. The uniqueness of a screen signature is limited to the set of signatures per a specific application, so as to avoid collision of signatures of similar screens across different applications. This entails that the type of application is a part of the signature. In addition, the order of traversing must be consistent for all screens, to avoid the generation of two signatures for the same screen.

Returning back to Fig. 1, the signature generation process is illustrated. At the first step, a collection of signatures for all screens of a specific application is generated in a prior process where a person, which will be referred to hereinafter also as a "Modeler" iterates over all the existing screens in a specific application and runs the same detection mechanism for creating the signature and saves in a database specific to this application all screen IDs and corresponding signatures. It scans each screen consistently in the same manner and extracts data about all elements (type and logical location on the tree).

At the next step, the resulting collection of signatures is saved in the memory of the mobile device. At the next step, an application that runs in the background (the background application) is installed in the mobile device and detects the generation of each new screen in that specific application (which is considered to be an "event"). The background application queries the Windows Mobile OS what is the current displayed foreground window using a common API, where the returned value is a 'window ID' for that visible window on screen. Each window ID can be used by a common Windows Mobile API to query for its descendent and sibling windows. Each window ID can be used for extracting a unique property that belongs to this window. That property can be the class name (a string that describes the type of the window, for example "BUTTON", "EDIT", "LISTVIEW" etc.) of a window, or a text associated with that window.

Once an event is detected (i.e., there is an intersection with a leaf or with a branch of the tree), the background application automatically locates the root of the tree, from which scanning starts.

At the next step, this background application scans the new screen. Whenever an element is detected during scanning, it is identified. Then a temporary signature is extracted using all identified elements within the scanned screen. This temporary signature is used by the background application to compare the temporary signature with the signatures saved in the database. If there is a match, the background application identifies the new screen and records the time in which the new screen appears. At the next step, a time line which contains all identified screens is generated and saved in the mobile device, or alternatively transmitted to a remote location for analysis. This timeline provides the required feedback, showing which screens of this specific application have been visited during a session and for how long.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A method for detecting and identifying displayed screens of a specific running application on the display of a mobile device operating under the Windows Mobile^{®} operating system, comprising:
a) generating, in advance, a collection of signatures for all screens of said specific application by a modeler, which scans each screen consistently in the same manner and extracts unique properties derived from all elements in said screen, being in a tree structure of said screen;
b) saving the resulting collection of signatures in the memory of said mobile device;
c) installing in said mobile device, a background application that detects events being the generation of each new screen in said specific application and allocated a screen ID to each new screen;
d) Once an event being an intersection with a leaf or with a branch of said tree is detected, allowing said background application to start consistent scanning from the root of the tree;
e) scanning said new screen by said background application;
f) whenever an element is detected during scanning, identifying said element and extracting a temporary signature using all identified elements within the scanned screen and said screen ID;
g) comparing, by said background application, the temporary signature with the signatures saved in the database; and
h) if there is a match, identifying the new screen by said background application and recording the time in which said new screen appears.

2. A method according to claim 1, further comprising generating a time line which contains the timing of all identified screens and saving said timeline in a remote location.

3. A method according to claim 1, wherein each element detected during scanning is identified by the classname of the foreground window.

4. A method according to claim 1, wherein the specific running application is the operating system of the mobile device.

5. A method according to claim 1, wherein the mobile device is a cellphone or a PDA.

6. A method according to claim 1, wherein the unique property is the classname of the displayed screen.
